Europäisches Patentamt

European Patent Office

Office européen des brevets

(11) Publication number: **0 157 050**
**A1**

(12) **EUROPEAN PATENT APPLICATION**

(21) Application number: **84308688.5**

(22) Date of filing: **13.12.84**

(51) Int. Cl.⁴: **F 16 H 37/02**

(30) Priority: **23.12.83 US 564856**

(43) Date of publication of application: **09.10.85**
**Bulletin 85/41**

(84) Designated Contracting States: **DE FR GB IT NL SE**

(71) Applicant: **BORG-WARNER CORPORATION, 200 South
Michigan Avenue, Chicago Illinois 60604 (US)**

(72) Inventor: **Smirl, Richard Lewis, 1428, South Highland
Avenue, Arlington Heights Illinois 60005 (JP)**

(74) Representative: **Williams, Trevor John, J.A. KEMP &
CO. 14 South Square Gray's Inn, London WC1R 5EU (GB)**

(54) Multi-pass continuously variable transmission.

(57) A multi-pass continuously variable transmission (10) includes an input shaft (12), an output shaft (16), gear sets forming gear trains having equal fixed reduction and overdrive ratios, and an infinitely variable speed mechanism (48) having a ratio range with limits of a reduction ratio substantially equal to the fixed reduction ratio and an overdrive ratio substantially equal to the fixed overdrive ratio. One-way clutches (26, 44) are engageable for establishing a first drive path from the input shaft through selected gear sets and the speed mechanism in one direction to the output shaft. Jaw clutches (32, 38) are engageable for establishing a second drive path from the input shaft through selected gear sets and the speed mechanism in the opposite direction to the output shaft. The speed mechanism ratio is varied through its range in one direction when the first drive path is established. The jaw clutches are then engaged, establishing the second drive path and causing the one-way clutches to disengage as the speed mechanism ratio is varied through its range in the opposite direction. An optional range extender (100) has a low range mode with a reduction ratio equal to the product of the fixed reduction ratio and the speed mechanism reduction ratio limit, a high range mode with direct drive, and a device for shifting from the low range mode to the high range mode after the speed mechanism ratio has been varied through its range in the opposite direction.

# MULTI-PASS CONTINUOUSLY VARIABLE TRANSMISSION

## Description

This invention relates generally to a continuously variable transmission (CVT). More particularly, it relates to a CVT in which elements having fixed ratios are combined with an infinitely variable speed mechanism having a ratio which is continuously variable within predetermined limits. The CVT provides multiple drive paths through the speed mechanism so as to extend the transmission ratio range, increase its torque capacity, or both.

The typical automotive transmission is shifted in descrete steps between a high-torque, low-speed mode for starting a vehicle and a high-speed, low-torque mode for vehicle operation at highway speeds. In a manual transmission shifting is accomplished by the engagement of gear sets. In an automatic transmission shifting is accomplished by the controlled engagement of friction elements. Because such shifting is in step functions, the most efficient vehicle operation can only be approximated. Automotive engineers have long recognized that efficiency would be improved if the transmission could be adjusted continuously to compensate for changing loads, speeds, etc. This would allow the engine to be operated at maximum efficiency under changing conditions.

CVTs have been known for some time. The typical CVT employs an infinitely variable speed mechanism comprising a variable pulley with a pair of flanges mounted on an input shaft such that at least one of the flanges is movable axially with respect to the other. Another, similar variable pulley is mounted on an output shaft. A flexible belt couples the pulleys for transferring torque therbetween when the input shaft is driven. When the pitch radius of one pulley is changed, the pitch radius of the other pulley is changed simultaneously in the opposite direction. As a result, the drive ratio between the input and output shafts is varied in a continuous, smooth manner within the ratio range of the speed mechanism. Typically this range is between an underdrive or reduction ratio and an overdrive ratio.

In recent years considerable work has been directed to the application of a CVT to the driveline of an automotive vehicle. Examples of such CVTs are disclosed in U.S. patent 4,228,691 issued October 21, 1980, . U.S. patent Re. 31,361 reissued August 30, 1983 and copending U.S. application 247,490 filed March 25, 1981. These patents and application are of common assignee herewith, and are incorporated herein by reference.

Another example of such a CVT includes an input shaft, an output shaft, two intermediate shafts, and an infinitely variable speed mechanism. Four friction clutches are selectively engaged to establish either of two drive paths. One drive path is from an engine to the first intermediate shaft, through the speed mechanism in one direction to the second intermediate shaft, and to the output shaft. The other drive path is from the engine through a chain/ sprocket assembly to the second intermediate shaft, through the speed mechanism in the opposite direction to the first intermediate shaft, and to the output shaft. In such an arrangement it is difficult to mate the CVT to different types of engines and/or vehicles. Further, the shift from one drive path to the other is rough because of problems encountered in disengaging two clutches and engaging to other clutches almost simultaneously.

In an automotive environment in particular, space constraints often dictate housing configurations, shaft center distances, pulley diameters, belt sizes, etc. Design parameters of this nature limit the ratio range and/or torque capacity of a CVT. Thus there remains a need in the art to develop a CVT with an extended ratio range, an increased torque capacity, or some combination of both. Such a CVT should not require an increase in the size of the belt in order to provide increased torque capacity. In addition, such a CVT should be easily adaptable for use in a variety of vehicles having different types of engines.

This invention is directed to meeting this need. To that end there is disclosed herein a multi-pass CVT including input shaft, an output shaft, and first and second intermediate shafts. First drive means engages the input and first intermediate shafts, and includes a one-way clutch allowing the first intermediate shaft to overrun. Second drive means is provided for engaging the input and second intermediate shafts. Third drive means is provided for engaging the first intermediate and output shafts. Fourth drive means engages the second intermediate and output shafts, and includes another one-way clutch allowing the fourth drive means to overrun. An infinitely variable speed mechanism engages the intermediate shafts. The first and fourth drive means establish a first drive path from the input shaft through the first drive means, first intermediate shaft, speed mechanism, second intermediate shaft and fourth drive means to the output shaft. The second and third drive means when engaged establish a second drive path from the input shaft through the second drive means, second intermediate shaft, speed mechanism, first intermediate shaft and third drive means to the output shaft.

The objects and advantages of this invention will · become apparent to those skilled in the art upon careful consideration of the specification herein, including the drawings, wherein:

FIGURES 1a, b, c and d are schematic illustrations showing the sequential operating characteristics of the multi-pass CVT;

FIGURE 2 is a sectional view showing structural details of the multi-pass CVT; and

FIGURES 3a and b are schematic illustrations showing the operating characteristics of a range extender which may be incorporated into the multi-pass CVT.

While this invention is susceptible of embodiment in many different forms, the preferred embodiment is shown in the drawings and described in detail. It should be understood that the present disclosure is considered to be an exemplification of the principals of the invention, and is not intended to limit the invention to this embodiment.

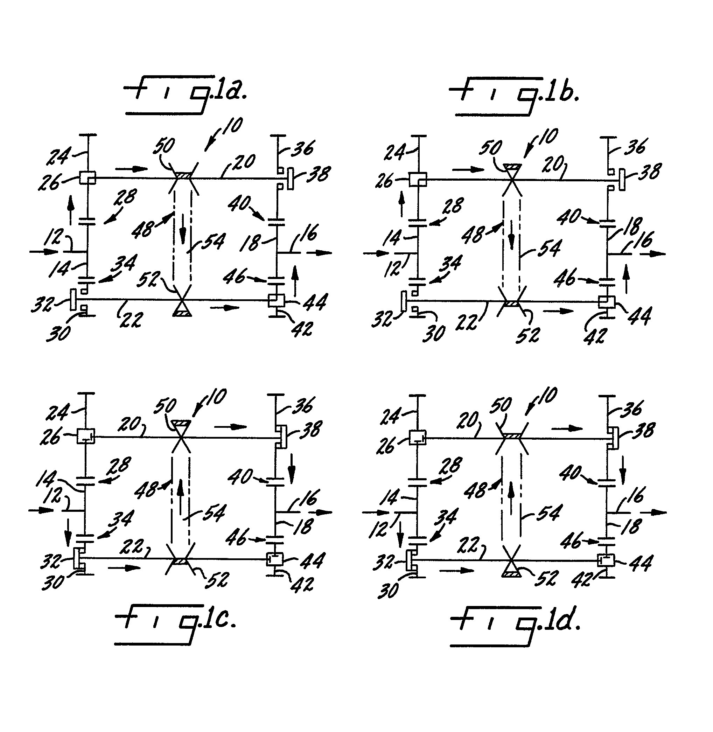

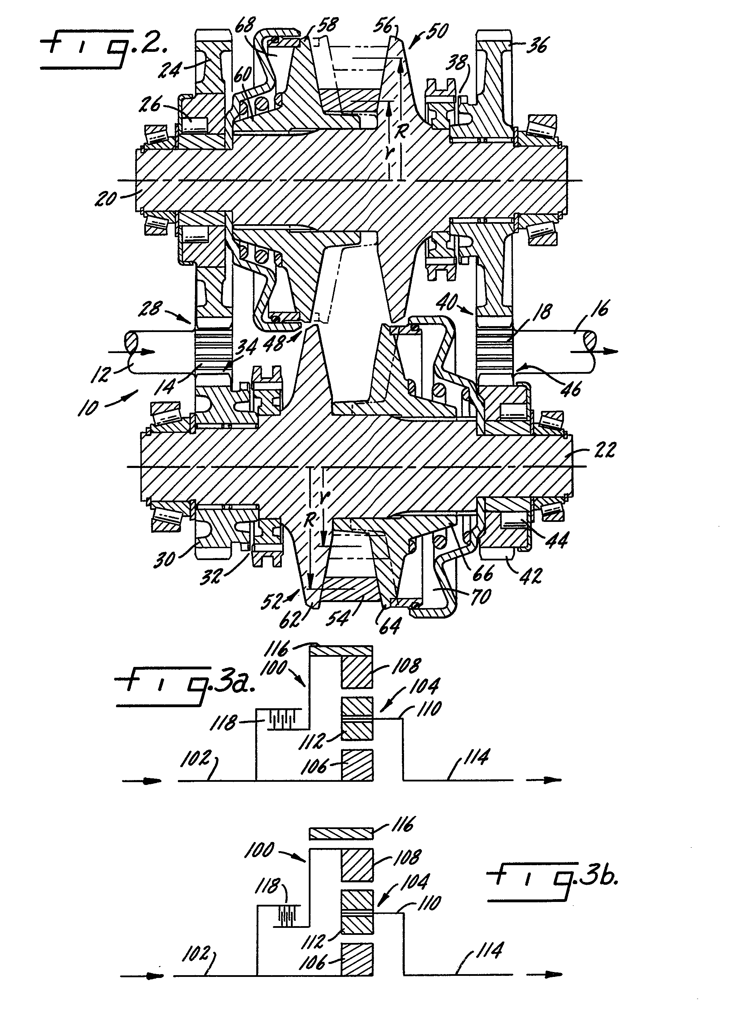

Referring now to FIGURES 1a, b, c and d and FIGURE 2 in greater detail, the preferred embodiment of this invention incorporates a multi-pass CVT 10 including an input shaft 12 adapted to receive torque from a power source, for example the engine of an automotive vehicle. An input drive gear 14 with Ti teeth is secured to shaft 12. CVT 10 also includes an output shaft 16 adapted to direct torque to a load, for example the drive axle of an automotive vehicle. An output driven gear 18 with To teeth is secured to shaft 16. Gear 14 should be designed to mate CVT 10 to the particular engine with which it is to be used, and gear 18 should be designed to mate CVT 10 to the vehicle driveline. Design considerations will determine the number of teeth which these two gears have. For simplicity it will be assumed that Ti = To.

CVT 10 also includes first and second intermediate shafts 20 and 22 respectively.

A first, driven gear 24 with T teeth is secured to the outer race of a one-way clutch 26, the inner race of which is secured to shaft 20. One-way clutch 26 is oriented such that shaft 20 may overrun gear 24. Gear 14, gear 24 and clutch 26 together constitute first drive means 28 for transferring torque from shaft 12 to shaft 20. Gear set 24-14 has a first, fixed ratio T/Ti.

A second, driven gear 30 with t teeth is journalled on shaft 22. A jaw clutch 32 or the like may be engaged to lock gear 30 to shaft 22. Gear 14, gear 30 and clutch 32 together consitute second drive means 34 for transferring torque from shaft 12 to shaft 22. Gear set 30-14 has a second, fixed ratio t/Ti.

A third, drive gear 36 with T teeth is journalled on shaft 20. Another jaw clutch 38 or the like may be engaged to lock shaft 20 to gear 36. Clutch 38, gear 36 and gear 18 together constitute third drive means 40 for transferring torque from shaft 20 to shaft 16. Gear set 18-36 has a third, fixed ratio To/T.

A fourth, drive gear 42 with t teeth is secured to the outer race of another one-way clutch 44, the inner race of which is secured to shaft 22. One-way clutch 44 is oriented such that gear 42 may overrun shaft 22. Clutch 44, gear 42 and gear 18 together constitute fourth drive means 46 for transferring torque from shaft 22 to shaft 16. Gear set 18-42 has a fourth, fixed ratio To/t.

Once again, design considerations will determine whether these four drive means provide reduction drive or overdrive. For example, if CVT 10 is to be used in a passenger automobile with a gasoline engine, it may be assumed that drive means 28 and 46 provide reduction drive, and that drive means 34 and 40 provide overdrive. With this assumption, gear set 24-14 has a reduction ratio $T/Ti$, and gear set 30-14 has an overdrive ratio $t/Ti$. Thus the ratio through a gear train comprising gears 24,14 and 30 (from shaft 20 to shaft 22) is $t/Ti$ x $1/T/Ti = t/T$ overdrive. In the opposite direction the ratio is $T/t$ reduction.

Similarly, gear set 18-36 has an overdrive ratio $To/T$, and gear set 18-42 has a reduction ratio $To/t$. Thus the ratio through a gear train comprising gears 42,18 and 36 (from shaft 22 to shaft 20) is $T/To$ x $1/t/To = T/t$ reduction. In the opposite direction the ratio is $t/T$ overdrive.

In summary, it is assumed that gears 14 and 18, gears 24 and 36, and gears 30 and 42 have equal numbers of teeth $Ti = To$, $T$, and $t$ respectively. It is important to remember, however, that this may be modified so long as the ratios through the gear trains (from one intermediate shaft to the other) are equal. Based upon the assumptions noted above, the ratios from shaft 20 to shaft 22 will be overdrive ratios. Obviously the ratios from shaft 22 to shaft 20 will be reduction ratios. Gear sets preferably provide these ratios, as it is believed that gearing allows maximum design flexibility with a particular advantage being that gear 14 is a common drive gear. Given this advantage, simply by changing the number of teeth in gear 14 the designer could easily provide gear sets with other ratio relationships if CVT 10 were to be used, for example, in an agricultural tractor with a Diesel engine, or in a sports car with a high-speed engine.

An infinitely variable speed mechanism 48 couples shafts 20 and 22. Although there are several types of such speed mechanisms which could be used in the CVT of this invention, the preferred speed mechanism 48 includes a variable pulley 50 on shaft 20 and another variable pulley 52 on shaft 22. Each pulley is continuously variable between a maximum pitch radius R and a minimum pitch radius r. A suitable belt 54 or the like couples pulleys 50 and 52. Examples of suitable belts are disclosed in U.S. patent 3,720,113 issued March 13, 1973 and U.S. patent 4,080,841 issued March 28, 1978. These patents are incorporated herein by reference. Another example of a belt suitable for use in a speed mechanism of this type is disclosed in U.S. patent 4,313,730 issued February 2, 1982. This patent is of common assignee herewith, and is incorporated herein by reference. Still another suitable belt may be of the type formed from elastomers and fibers. Indeed, it is apparent that a wide variety of belts may be used in a speed mechanism of this type.

As is well known in the art, the pitch radii of pulleys 50 and 52 may be varied such that the ratio of speed mechanism 48 is continuously variable within a range having predetermined limits. These limits should provide a fifth, reduction ratio R/r substantially equal to the reduction ratio T/t, and a sixth, overdrive ratio r/R substantially equal to the overdrive ratio t/T.

With particular reference to FIGURE 2, pulley 50 includes a fixed flange 56 rotatable with shaft 20 and a slidable flange 58 having a hub 60 rotatable with and slidable relative to shaft 20. As shown in solid lines, flange 58 is in its distal position relative to flange 56. In this position pulley 50 develops its minimum pitch radius r. As shown in dashed lines, flange 58 is in its proximal position, with hub 60 abutting flange 56. In this position pulley 50 develops its maximum pitch radius R.

Pulley 52 is similar to pulley 50, and indeed may be formed from virtually identical parts. Pulley 52 includes a fixed flange 62 rotatable with shaft 22 and a slidable flange 64 having a hub 66 rotatable with and slidable relative to shaft 22. As shown in solid lines, flange 64 is in its proximal position relative to flange 62, with hub 66 abutting flange 62. This determines the maximum pitch radius R of pulley 52. As shown in dashed lines, flange 64 is in its distal position, which determines the minimum pitch radius r of pulley 52.

With flanges 58 and 64 in their solid line positions, the ratio through speed mechanism 48 (from shaft 20 to shaft 22) is R/r reduction. With flanges 58 and 64 in their dashed line positions, the ratio through speed mechanism 48 (from shaft 20 to shaft 22) is r/R overdrive. Thus the ratio range of speed mechanism 48 is from R/r reduction to r/R overdrive. The same range

0157050

is obtained in the opposite direction (from shaft 22 to shaft 20). In other words, in either direction the total change in the ratio of speed mechanism 48 is numerically equal to $(R/r)^2$.

Suitable means (not shown) is provided for directing fluid to and from chambers 68 and 70 in order to slide flanges 58 and 64 respectively, and thus to vary the pitch radii of pulleys 50 and 52 between their predetermined minimum and maximum limits.

The sequence of events for an upshift begins after an associated starting clutch (not shown but preferably on the output side of CVT 10) is engaged. A first drive path is established from shaft 12 through drive means 28, shaft 20, speed mechanism 48, shaft 22 and drive means 46 to shaft 16. (See the arrows in FIGURE 1a). Gear 30 is rotating faster than shaft 22, with clutch 32 disengaged. Similarly, gear 36 is rotating slower than shaft 20, with clutch 38 disengaged. At this point CVT 10 provides reduction drive from shaft 12 to shaft 16.

Speed mechanism 48 now is shifted continuously through its ratio range from R/r reduction (FIGURE 1a) to r/R overdrive (FIGURE 1b). This results in a continuous, smooth increase in the output speed at shaft 16 numerically equal to $(R/r)^2$. Thus at the end of the first pass through speed mechanism 48, the change in the ratio of CVT 10 will be numerically equal to $(R/r)^2 = (T/t)^2$.

Based upon the assumptions noted above, at this point CVT 10 provides direct drive from shaft 12 to shaft 16. Shaft 22 is in substantial synchronism with gear 30, and shaft 20 is in substantial synchronism with gear 36. If desired, suitable sensors may be provided for transmitting appropriate torque and/or speed signals to control apparatus (not shown) which causes clutches 32 and 38 to be engaged. However clutches 32 and 38 are engaged, it should be noted that no synchronizers are required.

When clutches 32 and 38 are engaged, a second drive path is established from shaft 12 through drive means 34, shaft 22, speed mechanism 48, shaft 20 and drive means 40 to shaft 16. (See the arrows in FIGURE 1c). CVT 10 still provides direct drive from shaft 12 to shaft 16.

An important advantage of this invention is that CVT 10 is conditioned such that when speed mechanism 48 is shifted in the opposite direction, one-way clutches 26 and 44 disengage automatically, allowing shaft 20 to overrun gear 24, and allowing gear 42 to overrun shaft 22. Thus a smooth changeover from the first drive path to the second drive path is achieved simply and easily.

Speed mechanism 48 now is shifted in the opposite direction continuously through its ratio range from R/r reduction (FIGURE 1c) to r/R overdrive (FIGURE 1d). This results in an additional continuous, smooth increase in the output speed at shaft 16 numerically equal to $(R/r)^2$. Thus at the end of the second pass through speed mechanism 48, the total change in the ratio of CVT 10 will be numerically equal to $(R/r)^2 \times (R/r)^2 = (R/r)^4 = (T/t)^4$.

At this point CVT 10 provides overdrive from shaft 12 to shaft 16. One operating cycle (two passes through speed mechanism 48) has been completed. Belt 54 is in its initial, starting position, with pulleys 50 and 52 rotating at correspondingly higher speeds.

It will be clear to those skilled in the art that the ratio range of CVT 10 is extended to the maximum extent when R is as large as possible and r is as small as possible. If desired, some portion of this extended ratio range may be sacrificed in order to increase the torque capacity of CVT 10 without increasing the size of belt 54. This is possible because a limiting factor in determining torque capacity is the value of r. As r becomes larger, a larger segment of belt 54 is in torque-transferring engagement with pulleys 50 and 52 at their minimum pitch radii. Thus a higher torque can be transferred between belt and pulley with no change in the size of either. The designer has wide latitude in establishing the parameters which will optimize the ratio range/torque capacity relationship. Of course, as R/r is changed, T/t must be changed accordingly.

A typical single-pass CVT under development for the automotive industry obtains a torque capacity of approximately 100 foot-pounds from a currently available belt. The multi-pass CVT disclosed herein can be designed with a torque capacity in excess of 300 foot-pounds using the same belt.

R/r and r/R have been described as being substantially equal to T/t and t/T respectively. However, as a practical matter the overdrive ratio r/R should be very slightly smaller numerically than t/T, giving speed mechanism 48 a wider ratio range with limits very slightly greater than the ratios through the gear trains. As engagement of clutches 32 and 38 is initiated, speed mechanism 48 passes through synchronism; that is, beyond zero relative rotation of the engaging clutch elements. Shaft 22 and gear 36 respectively will rotate very slightly faster than gear 30 and shaft 20, providing very slight relative rotation between the engaging clutch elements and thus insuring that positive clutch engagement is completed. Thereafter, of course, shaft 22 and gear 30, and gear 36 and shaft 20, will be locked together for synchronous rotation.

FIGURES 3a and 3b illustrate schematically a range extender 100 which may be used with CVT 10. FIGURE 3a shows range extender 100 in the low or reduction ratio mode, and FIGURE 3b shows range extender 100 in the high or direct drive mode. A suitable range extender is disclosed in U.S. patent 2,711,656 issued June 28, 1955. This patent is of common assignee herewith, and is incorporated herein by reference.

Range extender 100 includes an input shaft 102 which may be connected to or an extension of shaft 16. A planetary gear assembly 104 or the like includes a sun gear 106, a ring gear 108, a carrier 110 and planet gears 112 supported by carrier 110 in meshing relationship with sun gear 106 and ring gear 108. Sun gear 106 is driven by shaft 102. Carrier 110 drives an output shaft 114.

In the low range mode illustrated in FIGURE 3a, a band 116 brakes ring gear 108, and a clutch 118 is disengaged. Ring gear 108 serves as a reaction member, and reduction ratio drive is established from shaft 102 through planetary gear assembly 104 to shaft 114. In this mode, band 116 also acts as a starting clutch, eliminating the need for a separate starting clutch.

In the high range mode illustrated in FIGURE 3b, band 116 is released, and clutch 118 is engaged so as to lock sun gear 106 to ring gear 108. Direct drive is established from shaft 102 through planetary gear assembly 104 to shaft 114.

The reduction ratio in the low range mode should be substantially equal to the total change in the ratio of CVT 10 during one cycle; that is, after two passes through speed mechanism 48. In the example noted above, this would be $(T/t)^4$.

With planetary gear assembly 104 designed for a $(T/t)^4$ reduction ratio in low, and for direct drive in high, and with CVT 10 designed with a total ratio change during one cycle equal to $(T/t)^4$, the sequence of operations requires that band 116 be engaged and clutch 118 disengaged during the first and second passes through speed mechanism 48. When the sequence reaches the configuration illustrated in FIGURE 1d, band 116 and clutches 32 and 38 are disengaged, returning CVT 10 to the configuration illustrated in FIGURE 1a. Clutch 118 then is engaged to decelerate the various gears and pulleys of CVT 10. If clutch 118 is designed such that it will hold a torque equal to or slightly in excess of the output torque of CVT 10, drive torque for shaft 114 will be maintained, and deceleration torque for CVT 10 will be provided. Under these conditions CVT 10 should return to its original speed in less than one second.

The operating cycle now may be repeated. At the end of two cycles; that is, four passes through speed mechanism 48, the total change in the ratio of CVT 10 will be $(T/t)^4$ x $(T/t)^4$ = $(T/t)^8$.

Additional operating cycles may be provided for by adding additional planetary gear assemblies or the like in series with planetary gear assembly 104, for example as disclosed in the aforementioned U.S. patent 2,711,656. This patent also discloses a forward/reverse arrangement which may be incorporated into CVT 10 if desired.

The sequence of operations described above relates to an upshift. For downshifting the sequence of operations would be reversed.

### CLAIMS

1. A multi-pass continuously variable transmission (10) comprising rotatable input (12) and output (16) shafts, first and second (22) rotatable intermediate shafts, first drive means (28) engaging said input shaft with said first intermediate shaft, said first drive means including a one-way clutch (26) allowing said first intermediate shaft to overrun, second drive means (34) for engaging said input shaft with said second intermediate shaft, third drive means (40) for engaging said first intermediate shaft with said output shaft, fourth drive means (46) engaging said second intermediate shaft with said output shaft, said fourth drive means including another one-way clutch (44) allowing said fourth drive means to overrun, and an infinitely variable speed mechanism (48) engaging said intermediate shafts, said first and fourth drive means establishing a first drive path from said input shaft through said first drive means, first intermediate shaft, speed mechanism, second intermediate shaft and fourth drive means to said output shaft, and said second and third drive means when engaged establishing a second drive path from said input shaft through said second drive means, second intermediate shaft, speed mechanism, first intermediate shaft and third drive means to said output shaft.

2. The multi-pass continuously variable transmission of claim 1, said first (28), second (34), third (40) and fourth (46) drive means respectively having first (T/Ti), second (t/Ti), third (To/T) and fourth (To/T) drive ratios, the product of said first ratio and the reciprocal of said second ratio being equal to the product of said fourth ratio and the reciprocal of said third ratio, and said speed mechanism (48) having a ratio range with limits of fifth (R/r) and sixth (r/R) drive ratios, said fifth ratio being substantially equal to said product, and said sixth ratio being substantially equal to the reciprocal of said product.

3. The multi-pass continuously variable transmission of claim 2, said first (T/Ti) and fourth (To/t) ratios being reduction ratios, and said second (t/Ti) and third (To/T) ratios being overdrive ratios.

4. The multi-pass continuously variable transmission of claim 3, said reduction ratios being equal, and said overdrive ratios being equal.

5. The multi-pass continuously variable transmission of claim 2, said first (28) and second (34) drive means respectively including first and second gear sets having a common drive gear (14) driven by said input shaft (12).

6. The multi-pass continuously variable transmission of claim 2, said third (40) and fourth (46) drive means respectively including third and fourth gear sets having a common driven gear (18) driving said output shaft (16).

7. The multi-pass continuously variable transmission of claim 5, said third (40) and fourth (46) drive means respectively including third and fourth gear sets having a common driven gear (18) driving said output shaft (16).

8.   The multi-pass continuously variable transmission of claim 7, said one-way clutch (26) engaging the driven gear (24) of said first gear set with said first intermediate shaft (20), a jaw clutch (32) engaging the driven gear of said second gear set with said second intermediate shaft (22), another jaw clutch (38) engaging said first intermediate shaft (20) with the drive gear of said third gear set, and said other one-way clutch (44) engaging said second intermediate shaft (22) with the drive gear of said fourth gear set.

9.   The multi-pass continuously variable transmission of claim 8, said speed mechanism (48) including a variable pitch pulley (50) rotatable with said first intermediate shaft (20), another variable pitch pulley (52) rotatable with said second intermediate shaft, and a belt (54) coupling said pulleys, each of said pulleys including a fixed flange (56,62) rotatable with its associated intermediate shaft, and another flange (58,64) rotatable with and slidable relative to its associated intermediate shaft between proximal and distal positions relative to its associated fixed flange, the distal position of the slidable flange of said pulley and the proximal position of the slidable flange of said other pulley determining one of said limits, and the proximal position of the slidable flange of said pulley and the distal position of the slidable flange of said other pulley determining the other of said limits.

0157050

10.   The multi-pass continuously variable transmission of claim 2, further comprising a range extender (100) having a low range mode with a ratio substantially equal to the product of said first (T/Ti), fourth (To/T) and fifth (R/r) ratios, a high range mode with direct drive, and means for shifting between said modes.

11.   The multi-pass continuously variable transmission of claim 3, further comprising a range extender (100) having a low range mode with a ratio substantially equal to the product of said first (T/Ti), fourth (To/T) and fifth (R/r) ratios, a high range mode with direct drive, and means for shifting between said modes.

12.   The multi-pass continuously variable transmission of claim 7, further comprising a range extender (100) having a low range mode with a ratio substantially equal to the product of said first (T/Ti), fourth (To/T) and fifth (R/r) ratios, a high range mode with direct drive, and means for shifting between said modes.

13.   The multi-pass continuously variable transmission of claim 8, further comprising a range extender (100) having a low range mode with a ratio substantially equal to the product of said first (T/Ti), fourth (To/T) and fifth (R/r) ratios, a high range mode with direct drive, and means for shifting between said modes.

14.   The multi-pass continuously variable transmission of claim 9, further comprising a range extender (100) having a low range mode with a ratio substantially equal to the product of said first (T/Ti), fourth (To/T) and fifth (R/r) ratios, a high range mode with direct drive, and means for shifting between said modes.

15.  A multi-pass continuously variable transmission (10) comprising rotatable input (12) and output (14) shafts, first (20) and second (22) rotatable intermediate shafts, first (28) and second (34) drive means for engaging said input shaft with said first and second intermediate shafts respectively, said first and second drive means respectively including first and second gear sets having a common drive (14) gear driven by said input shaft (12), third (40) and fourth drive means (46) for engaging said first and second intermediate shafts respectively with said output shaft (16), and an infinitely variable speed mechanism engaging said intermediate shafts (20,22), said first (28) and fourth (46) drive means when engaged establishing a first drive path from said input shaft through said first drive means, first intermediate shaft, speed mechanism, second intermediate shaft and fourth drive means to said output shaft, and said second (34) and third (40) drive means when engaged establishing a second drive path from said input shaft through said second drive means, second intermediate shaft, speed mechanism, first intermediate shaft and third drive means to said output shaft.

16.  The multi-pass continuously variable transmission of claim 15, said third (40) and fourth (46) drive means respectively including third and fourth gear sets having a common driven gear (18) driving said output shaft (16).

17.  The multi-pass continuously variable transmission of claim 16, said first, second, third and fourth gear sets respectively having first (T,Ti), second (t/Ti), third (To/T) and fourth (To/t) drive ratios, the product of said first ratio and the reciprocal of said second ratio being equal to the product of said fourth ratio and the reciprocal of said third ratio, and said speed mechanism (48) having a ratio range with limits of fifth (R/r) and sixth (r/R) drive ratios, said fifth ratio being substantially equal to said product, and said sixth ratio being substantially equal to the reciprocal of said product.

18. The multi-pass continuously variable transmission of claim 17, further comprising a range extender (100) having a low range mode with a ratio substantially equal to the product of said first (T/Ti), fourth (To/t) and fifth (R/r) ratios, a high range mode with direct drive, and means for shifting between said modes.

19. A multi-pass continuously variable transmission (10) comprising rotatable input (12) and output (16) shafts; first (20) and second (22) rotatable intermediate shafts; an infinitely variable speed mechanism (48); drive means having one-way clutch means completing a first drive path including, in order, said input shaft (12), first intermediate shaft (20), speed mechanism (48), second intermediate shaft (22), and output shaft (16); and other drive means for completing a second drive path including, in order, said input shaft (12), second intermediate shaft (22), speed mechanism (48), first intermediate shaft (20), and output shaft (16); said one-way clutch means being constructed and arranged to be disengageable upon completion of said second drive path.

*fig*.1a.

*fig*.1b.

*fig*.1c.

*fig*.1d.

**fig.2.**

**fig.3a.**

**fig.3b.**

European Patent Office

**EUROPEAN SEARCH REPORT**

0157050
Application number

EP   84 30 8688

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 004 412   (GKN TRANSMISSIONS) <br> * Complete document * | 1-7,9, 15-17 | F 16 H   37/02 |
| A | FR-A-2 303 206   (THE SCIENTIFIC RESEARCH FOUNDATION) <br> * Complete document * | 1-7,9, 15-17 | |
| A | PATENT ABSTRACTS OF JAPAN, vol. 5, no. 131, 21st August 1981, (M-84) (803); & JP-A-56-66552 (AISHIN WARNER K.K.) 05-06-1981 | 10-14, 18 | |
| A | FR-A-2 520 826   (REGIE NATIONALE DES USINES RENAULT) | | |

- - - - -

| | TECHNICAL FIELDS SEARCHED (Int. Cl.4) |
|---|---|
| | F 16 H   37/00 <br> B 60 K   17/00 |

The present search report has been drawn up for all claims

| Place of search <br> BERLIN | Date of completion of the search <br> 23-04-1985 | Examiner <br> LEMBLE Y.A.F.M. |
|---|---|---|